(19) **Europäisches Patentamt / European Patent Office / Office européen des brevets**

(11) **EP 1 857 519 A1**

(12) **EUROPEAN PATENT APPLICATION**
published in accordance with Art. 158(3) EPC

(43) Date of publication:
**21.11.2007 Bulletin 2007/47**

(51) Int Cl.:
**C09K 3/00** *(2006.01)*  **B01J 13/14** *(2006.01)*
**C08J 9/32** *(2006.01)*

(21) Application number: **06713545.9**

(22) Date of filing: **06.02.2006**

(86) International application number:
**PCT/JP2006/302403**

(87) International publication number:
**WO 2006/083041 (10.08.2006 Gazette 2006/32)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **07.02.2005 JP 2005030663**

(71) Applicant: **Kureha Corporation Tokyo 103-8552 (JP)**

(72) Inventor: **EJIRI, Tetsuo Nishiki-machi, Iwaki-shi, Fukushima, 974-8686 (JP)**

(74) Representative: **Albrecht, Thomas Kraus & Weisert Patent- und Rechtsanwälte Thomas-Wimmer-Ring 15 80539 München (DE)**

(54) **THERMALLY FOAMABLE MICROSPHERE, PROCESS FOR PRODUCING THE SAME, AND COMPOSITION**

(57) A thermally foamable microsphere having a structure that a foaming agent is encapsulated in an outer shell formed from a polymer, wherein supposing an electric conductivity of a water extract obtained by Step 1 of dispersing 5 g of the thermally foamable microsphere in 20 g of ion-exchanged water having a pH of 7 and an electric conductivity of $\sigma 1$ at a temperature of 25°C to prepare a liquid dispersion; and Step 2 of shaking the liquid dispersion at the same temperature for 30 minutes to conduct a water extraction treatment, as measured at 25°C is $\sigma 2$, a difference $\sigma 2 - \sigma 1$ between $\sigma 2$ and $\sigma 1$ is at most 1 mS/cm, and a production process including measuring an electric conductivity of a filtrate in the washing step to obtain a thermally foamable microsphere exhibiting a desired electric conductivity on the basis of a previously prepared relational expression between the electric conductivity of the filtrate and the electric conductivity of a water extract of the thermally foamable microsphere.

Fig. 1

**Description**

TECHNICAL FIELD

The present invention relates to a thermally foamable microsphere having a structure that a foaming agent is encapsulated in an outer shell formed from a polymer, and more specifically to a thermally foamable microsphere low in the content of ionic impurities such as a sodium ion, a magnesium ion and a chloride ion.

The present invention also relates to a composition with thermally foamable microspheres low in the content of ionic impurities or foamed particles thereof dispersed in a polymeric material, paint, adhesive or pressure sensitive adhesive, ink or aqueous medium. The present invention further relates to a production process of a thermally foamable microsphere low in the content of ionic impurities.

BACKGROUND ART

A thermally foamable microsphere is obtained by microcapsulating a volatile foaming agent with a polymer and also called a thermally expandable microcapsule or thermally expandable microsphere. The thermally foamable microsphere can be generally produced by a process in which a polymerizable monomer mixture containing at least a polymerizable monomer and a foaming agent is suspension-polymerized in an aqueous dispersion medium. An outer shell (shell) is formed by a polymer formed as a polymerization reaction progresses, thereby obtaining the thermally foamable microsphere having a structure that the foaming agent is encapsulated in the outer shell so as to be wrapped in the outer shell.

As the polymer forming the outer shell, is generally used a thermoplastic resin having good gas barrier properties. The polymer forming the outer shell is softened by heating. As the foaming agent, is generally used a low-boiling compound such as a hydrocarbon which becomes a gaseous state by heating. When the thermally foamable microsphere is heated, the foaming agent vaporizes, and the expanding force thereof acts on the outer shell, also the elastic modulus of the polymer forming the outer shell rapidly decreases at the same time. Therefore, rapid expansion occurs bordering on a certain temperature. This temperature is referred to as a foaming start temperature. When the thermally foamable microsphere is heated to a temperature not lower than the foaming start temperature, the microsphere itself expands to form a foamed particle (closed-cell foamed particle).

The thermally foamable microsphere is used in a wide variety of fields as a designing ability-imparting agent, a functionality-imparting agent, a weight-lightening agent and the like making good use of its properties of forming a foamed particle. More specifically, the thermally foamable microsphere is added for use to, for example, polymeric materials such as synthetic resins (thermoplastic resins and thermosetting resins) and rubbers, paints, inks, aqueous media, and the like. When high performance comes to be required of the respective application fields, the performance level required of the thermally foamable microsphere is also raised. As an example of the performance required of the thermally foamable microsphere, is mentioned reduction in the content of ionic impurities.

As described above, the thermally foamable microsphere is produced by the process in which a polymerizable mixture containing at least a polymerizable monomer and a foaming agent is suspension-polymerized in an aqueous dispersion medium. The aqueous dispersion medium is prepared by adding a dispersion stabilizer and a dispersion aid to an aqueous dispersion medium such as ion-exchanged water for the purpose of suspending the polymerizable mixture as stable and uniform droplets.

Specifically, for example, when magnesium hydroxide colloid is contained as a dispersion stabilizer in an aqueous dispersion medium, thermally foamable microspheres having a sharp particle diameter distribution can be obtained. When an inorganic salt such as sodium chloride or sodium sulfate is contained as a dispersion aid in the aqueous dispersion medium, thermally foamable microspheres having an evener particle form can be obtained. When sodium nitrite is contained as a polymerization aid in the aqueous dispersion medium, aggregation among polymer particles formed in polymerization can be prevented, and adhesion of scale to the wall of a polymerization vessel can be prevented.

The magnesium hydroxide colloid used as the dispersion stabilizer is hardly water-soluble under alkaline conditions. However, when an acid is added after polymerization to change the conditions to acidic or neutral conditions, the colloid is dissolved to form a magnesium ion. The inorganic salt such as sodium chloride is contained in a polymerization reaction mixture to become ionic impurities. Sodium nitrite may be partially decomposed under acidic conditions to produce a sodium ion in some cases.

After completion of the polymerization, the impurities are generally removed by separating the thermally foamable microspheres from the polymerization reaction mixture by filtration and washing the microspheres with water. However, it was found that ions (also referred to as "alkali metal ions") of metals of Group 1A of the periodic table, such as a sodium ion, ions ("alkaline earth metal ions" in a broad sense) of metals of Group 2A of the periodic table, such as a magnesium ion, halide ions such as a chlorine ion, or mixtures thereof remain as ionic impurities in the thermally foamable microspheres purified by the ordinary washing though the amount thereof is extremely small, and such impurities form the cause of various inconveniences, or offer obstruction to the development of new uses.

When a chipping-resistant paint obtained by adding thermally foamable microspheres to a chipping-resistant paint for coating a bottom of a car body for the purpose of saving its weight is used, the ionic impurities contained in the thermally foamable microspheres form the cause of the occurrence of rust at the bottom of the car body. Since a pressure sensitive adhesive sheet with thermally foamable microspheres contained in a pressure sensitive adhesive layer lowers its adhesive strength when the thermally foamable microspheres are heated and foamed, it is suitable for use as a temporarily fixing material upon processing of electronic parts or a releasable label. However, an extremely small amount of ionic impurities contained in the thermally foamable microspheres are easy to contaminate the electronic parts or corrode metal members or metal-plated parts.

In order to reduce the ionic impurities contained in the thermally foamable microspheres, it is considered to sufficiently conduct water washing in a washing step after polymerization. However, the degree of reduction of the ionic impurities, which can satisfy the required level, has been indefinite. When the number of times of water washing, or the amount of washing water used is increased, the time required of filtration is lengthened, and so productivity is lowered, and the amount of waste water is increased. Accordingly, from the viewpoints of reduced workload, reduced cost, suppressed amount of waste water, etc., it is not that the mere sufficient water washing is satisfactory. In addition, when the polymer of the outer shell is formed with a polymerizable monomer (also referred to as "halogenated polymerizable monomer") having a bound halogen atom, a halide ion such as a chloride ion is easy to be formed by heating upon foaming, molding, drying or the like of the thermally foamable microspheres.

There has heretofore been proposed a thermally released pressure sensitive adhesive sheet, in which a thermally expandable pressure sensitive adhesive layer containing thermally expandable microspheres (i.e., thermally foamable microspheres) is formed on at least one surface of a base material, and an anti-corrosive component is contained in the thermally expandable pressure sensitive adhesive layer (Japanese Patent Application Laid-Open No. 2004-175960). This document describes that when the anti-corrosive component such as an ion adsorbent or corrosion inhibitor is contained in the thermally expandable pressure sensitive adhesive layer, an ionic component can be made harmless without removing the ionic component.

According to the method of adding the anti-corrosive component, however, the anti-corrosive component is evenly dispersed as fine particles having an extremely small average particle diameter, so that it is necessary to precisely control a dispersing step and a coating step. In addition, if a portion where the anti-corrosive component is unevenly dispersed is present, ionic impurities partially remain. In this method, the amount of the ionic impurities contained in the thermally foamable microspheres is clearly unknown, so that it is difficult to strictly control the amount of the anti-corrosive component added. If the anti-corrosive component is added in a great amount, adhesive properties such as adhesive strength are adversely affected.

DISCLOSURE OF THE INVENTION

It is an object of the present invention to provide a thermally foamable microsphere, which is low in the content of ionic impurities and satisfies the level required for prevention of corrosion, and the like.

Another object of the present invention is to provide a composition containing a thermally foamable microsphere reduced in the content of ionic impurities.

A further object of the present invention is to provide a process for producing a thermally foamable microsphere having an electric conductivity of a desired level, and in turn a desired content of ionic impurities by controlling a washing step by a simple method.

The present inventor has carried out an extensive investigation with a view toward achieving the above objects. As a result, it has been found that the electric conductivity of a water extract of a thermally foamable microsphere is controlled to 1 mS/cm (1,000 μs/cm) or lower, preferably 0.5 mS/cm (500 μs/cm) or lower, thereby obtaining a thermally foamable microsphere, the content of ionic impurities such as a sodium ion, a magnesium ion and a chlorine ion of which satisfies the level required for prevention of corrosion and/or prevention of contamination.

In order to reduce the electric conductivity of the water extract of the thermally foamable microsphere, it is effective to sufficiently conduct water washing in a washing step after polymerization. At this time, the electric conductivity of a filtrate obtained by filtration of washings is continuously or intermittently measured to control washing conditions on the basis of a previously prepared relational expression between the electric conductivity of the filtrate and the electric conductivity of a water extract of the thermally foamable microsphere, whereby a thermally foamable microsphere having a desired electric conductivity can be obtained. Therefore, the thermally foamable microsphere having a desired content of ionic impurities can be recovered with good efficiency by a minimum water washing treatment.

When the thermally foamable microsphere according to the present invention or a foam thereof is dispersed in a polymeric material, paint, adhesive or pressure sensitive adhesive, ink or aqueous medium, a composition undergoing none of inconveniences such as corrosion and contamination by ionic impurities can be obtained. The present invention has been led to completion on the basis of these findings.

According to the present invention, there is provided a thermally foamable microsphere having a structure that a foaming agent is encapsulated in an outer shell formed from a polymer, wherein supposing an electric conductivity of a water extract obtained by the following Steps 1 and 2:

(1) Step 1 of dispersing 5 g of the thermally foamable microsphere in 20 g of ion-exchanged water having a pH of 7 and an electric conductivity of $\sigma 1$ at a temperature of 25°C to prepare a liquid dispersion; and
(2) Step 2 of shaking the liquid dispersion at the same temperature for 30 minutes to conduct a water extraction treatment,

as measured at 25°C is $\sigma 2$, a difference $\sigma 2 - \sigma 1$ between $\sigma 2$ and $\sigma 1$ is at most 1 mS/cm.

According to the present invention, there is also provided a composition comprising the above-described thermally foamable microsphere or a foam thereof dispersed in a polymeric material, paint, adhesive or pressure sensitive adhesive, ink or aqueous medium.

According to the present invention, there is further provided a process for producing a thermally foamable microsphere, which comprises a polymerization step of suspension-polymerizing a polymerizable monomer mixture containing at least a foaming agent and a polymerizable monomer in an aqueous dispersion medium to synthesize a thermally foamable microsphere having a structure that the foaming agent is encapsulated in an outer shell formed from a polymer formed, and a washing step of washing the thermally foamable microsphere, wherein washing with ion-exchanged water and filtration are conducted in the washing step, and at this time an electric conductivity of a filtrate is measured to obtain a thermally foamable microsphere exhibiting a desired electric conductivity on the basis of a previously prepared relational expression between the electric conductivity of the filtrate and the electric conductivity of a water extract of the thermally foamable microsphere.

BRIEF DESCRIPTION OF THE DRAWINGS

FIG. 1 is a graph illustrating the relationship between the electric conductivity of a filtrate and the electric conductivity of a thermally foamable microsphere.
FIG. 2 is a graph illustrating the relationship between the electric conductivity of a thermally foamable microsphere and the content of ionic impurities (a sodium ion and a chloride ion).

BEST MODE FOR CARRYING OUT THE INVENTION

The thermally foamable microsphere according to the present invention has a structure that a foaming agent is encapsulated in an outer shell formed from a polymer. The thermally foamable microsphere having such a structure can be generally produced by a process of suspension-polymerizing a polymerizable monomer in the presence of the foaming agent in an aqueous dispersion medium containing a dispersion stabilizer.

In order to obtain a thermally foamable microsphere, in which the content of ionic impurities is reduced, and the electric conductivity of a water extract is low, a method, in which water washing is conducted to a necessary extent in the washing step after the polymerization step; a method, in which a polymerizable monomer containing no halogen atom is used; and a combined method of these methods are mentioned.

(1) Vinyl monomer

As the polymer forming the outer shell is preferred a homopolymer or copolymer obtained by polymerizing a polymerizable monomer or polymerizable monomer mixture containing at least one vinyl monomer selected from the group consisting of vinylidene chloride, acrylonitrile, methacrylonitrile, acrylic acid, methacrylic acid, acrylic esters, methacrylic esters, aromatic vinyl compounds and vinyl acetate. In order to obtain a thermally foamable microsphere low in the content of a halide ion such as a chloride ion or a thermally foamable microsphere hard to cause dehalogenation upon heat treatment, it is preferable that the used proportion of a polymerizable monomer containing a halogen atom such as a chlorine atom is lessened, or such a monomer is not used at all.

Examples of the acrylic esters include methyl acrylate, ethyl acrylate, butyl acrylate and dicyclopentenyl acrylate. However, the acrylic esters are not limited thereto. Examples of the methacrylic esters include methyl methacrylate, ethyl methacrylate, butyl methacrylate and isobornyl methacrylate. However, the methacrylic esters are not limited thereto. Examples of the aromatic vinyl compounds include styrene, $\alpha$-methylstyrene and halogenated styrene derivatives. However, the aromatic vinyl compounds are not limited thereto.

In addition to the above-mentioned monovinyl monomers, other vinyl monomers, for example, nitrile monomers such as α-chloroacrylonitrile, α-ethoxyacrylonitrile and fumaronitrile; vinyl chloride; conjugated dienes such as chloroprene, isoprene and butadiene; N-substituted maleimides such as N-phenylmaleimide, N-naphthylmaleimide, N-cyclohexylmaleimide and methylmaleimide; and unsaturated acids such as crotonic acid and maleic anhydride may be used as the vinyl monomers as needed.

In the thermally foamable microsphere according to the present invention, the polymer forming the outer shell is preferably excellent in gas barrier properties and more preferably excellent in gas barrier properties, heat resistance and solvent resistance. From these points of view, the polymer forming the outer shell is preferably a vinylidene chloride (co)polymer and a (meth)acrylonitrile (co)polymer, more preferably a vinylidene chloride copolymer and a (meth)acrylonitrile copolymer, particularly preferably a (meth)acrylonitrile copolymer. A copolymer formed of monovinyl monomers having neither a halogen atom nor a nitrile group may also be used.

As examples of the vinylidene chloride (co)polymer, may be mentioned a homopolymer and copolymers obtained by using vinylidene chloride alone or a mixture of vinylidene chloride and a vinyl monomer copolymerizable therewith. Examples of the monomer copolymerizable with vinylidene chloride include acrylonitrile, methacrylonitrile, methacrylic esters, acrylic esters, styrene and vinyl acetate.

As such a vinylidene chloride (co)polymer is preferred a (co)polymer obtained by using a polymerizable monomer or polymerizable monomer mixture containing (A) 30 to 100% by weight of vinylidene chloride and (B) 0 to 70% by weight of at least one vinyl monomer selected from the group consisting of acrylonitrile, methacrylonitrile, acrylic esters, methacrylic esters, styrene and vinyl acetate. If the proportion of vinylidene chloride copolymerized is lower than 30% by weight, it is difficult to make the gas barrier properties of the resulting outer shell sufficiently high.

As a vinylidene chloride copolymer is preferred a copolymer obtained by using a polymerizable monomer mixture containing (A1) 40 to 80% by weight of vinylidene chloride, (B1) 0 to 60% by weight of at least one vinyl monomer selected from the group consisting of acrylonitrile and methacrylonitrile and (B2) 0 to 60% by weight of at least one vinyl monomer selected from the group consisting of acrylic esters and methacrylic esters. By using such a copolymer, the foaming temperature of the resulting microsphere is easy to be designed, and a high expansion ratio can be easily achieved.

The outer shell is preferably formed from a (meth)acrylonitrile (co)polymer from the viewpoints of solvent resistance and foamability at a high temperature. In the present invention, the (meth) acrylonitrile means acrylonitrile and/or methacrylonitrile. In other words, the (meth)acrylonitrile means at least one nitrile monomer selected from the group consisting of acrylonitrile and methacrylonitrile. As nitrile monomers, α-chloroacrylonitrile, α-ethoxyacrylonitrile, fumaronitrile or the like may be used in combination with acrylonitrile and/or methacrylonitrile as needed.

As examples of the (meth)acrylonitrile (co)polymer, may be mentioned copolymers obtained by using (meth) acrylonitrile alone or meth(acrylonitrile) and a vinyl monomer copolymerizable therewith. The vinyl monomer copolymerizable with (meth)acrylonitrile is preferably vinylidene chloride, an acrylic ester, a methacrylic ester, styrene or vinyl acetate.

Such a (meth)acrylonitrile (co)polymer is preferably a (co)polymer obtained by using a polymerizable monomer or polymerizable monomer mixture containing (C) 30 to 100% by weight of at least one nitrile monomer selected from the group consisting of acrylonitrile and methacrylonitrile and (D) 0 to 70% by weight of at least one vinyl monomer selected from the group consisting of vinylidene chloride, acrylic esters, methacrylic esters, styrene and vinyl acetate. If the proportion of the (meth)acrylonitrile copolymerized is lower than 30% by weight, the solvent resistance and heat resistance of the resulting outer shell become insufficient.

The (meth)acrylonitrile (co)polymers may be divided into a (co)polymer that the proportion of (meth) acrylonitrile used is high, and the foaming temperature is high, and a (co)polymer that the proportion of (meth)acrylonitrile used is low, and the foaming temperature is low. Examples of the (co)polymer that the proportion of (meth)acrylonitrile used is high include (co)polymers obtained by using a polymerizable monomer or polymerizable monomer mixture containing (C) 70 to 100% by weight of at least one monomer selected from the group consisting of acrylonitrile and methacrylonitrile and (D) 0 to 30% by weight of at least one vinyl monomer selected from the group consisting of vinylidene chloride, acrylic esters, methacrylic esters, styrene and vinyl acetate. On the other hand, examples of the (co)polymer that the proportion of (meth)acrylonitrile used is low include copolymers obtained by using a polymerizable monomer or polymerizable monomer mixture containing (C) not lower than 30% by weight to lower than 70% by weight of at least one nitrile monomer selected from the group consisting of acrylonitrile and methacrylonitrile and (D) higher than 30% by weight to not higher than 70% by weight of at least one monomer selected from the group consisting of vinylidene chloride, acrylic esters, methacrylic esters, styrene and vinyl acetate.

As the (meth)acrylonitrile (co)polymer is preferred a (co)polymer obtained by using a polymerizable monomer or polymerizable monomer mixture containing (C1) 51 to 100% by weight of at least one nitrile monomer selected from the group consisting of acrylonitrile and methacrylonitrile, (D1) 0 to 40% by weight of vinylidene chloride and (D2) 0 to 48% by weight of at least one vinyl monomer selected from the group consisting of acrylic esters and methacrylic esters.

When a (co)polymer containing no vinylidene chloride is desired as the polymer of the outer shell, preference is given to a (meth)acrylonitrile (co)polymer obtained by using a polymerizable monomer or polymerizable monomer mixture containing (E) 30 to 100% by weight of at least one monomer selected from the group consisting of acrylonitrile and methacrylonitrile and (F) 0 to 70% by weight of at least one monomer selected from the group consisting of acrylic esters and methacrylic esters. As the (meth)acrylonitrile copolymer is preferred a copolymer obtained by using a polymerizable monomer mixture containing (E1) 1 to 99% by weight of acrylonitrile, (E2) 1 to 99% by weight of methacrylonitrile and (F) 0 to 70% by weight of at least one monomer selected from the group consisting of acrylic esters and methacrylic esters.

In order to obtain a thermally foamable microsphere far excellent in processability, foamability, gas barrier properties, solvent resistance and the like, it is preferable to use a (meth)acrylonitrile copolymer obtained by polymerizing a polymerizable monomer mixture containing 70 to 99% by weight of at least one nitrile monomer selected from the group consisting of acrylonitrile and methacrylonitrile and 1 to 30% by weight of other vinyl monomer(s). In this (meth) acrylonitrile copolymer, acrylonitrile and methacrylonitrile are preferably used in combination, and a nitrile monomer mixture containing 20 to 80% by weight of acrylonitrile and 20 to 80% by weight of methacrylonitrile is more preferably used. The proportion of the nitrile monomer is preferably 80 to 99% by weight, more preferably 85 to 98% by weight. As the other vinyl monomers are preferred acrylic esters and methacrylic esters. However, various kinds of the vinyl monomers mentioned above may also be used in addition to these monomers.

As the polymer forming the outer shell, is mentioned a copolymer having neither a bound halogen atom nor a nitrile group. Examples of the copolymer having neither a bound halogen atom nor a nitrile group include copolymers obtained by polymerizing (G1) 1 to 40% by weight of at least one vinyl monomer selected from vinyl monomers of unsaturated acids, (G2) 20 to 99% by weight of at least one vinyl monomer selected from acrylic esters and methacrylic esters and (G3) 0 to 5% by weight of other vinyl monomer(s) used as needed.

(2) Crosslinkable monomer

In the present invention, such vinyl monomers as mentioned above and a crosslinkable monomer may be used in combination. The combined use of the crosslinkable monomer permits the resulting thermally foamable microsphere to improve processability, foaming properties, heat resistance, solvent resistance and the like. As the crosslinkable monomer, is used a polyfunctional compound having at least two polymerizable carbon-carbon double bonds. Examples of the polymerizable carbon-carbon double bonds include vinyl, methacryl, acryl and allyl groups. At least two polymerizable carbon-carbon double bonds may be the same or different from each other.

Examples of the crosslinkable monomer include bifunctional crosslinkable monomers, such as aromatic divinyl compounds such as divinylbenzene, divinylnaphthalene and derivatives thereof; diethylenically unsaturated carboxylic esters such as ethylene glycol diacrylate, diethylene glycol diacrylate, ethylene glycol dimethacrylate, diethylene glycol dimethacrylate and 1,3-butyl glycol dimethacrylate; acrylates or methacrylates derived from aliphatic alcohols having hydroxyl groups at both ends, such as 1,4-butanediol and 1,9-nonanediol; and divinyl compounds such as N,N-divinylaniline and divinyl ether.

Examples of trifunctional or still higher polyfunctional crosslinkable monomers include trimethylolpropane triacrylate, trimethylolpropane trimethacrylate, pentaerythritol triacrylate, pentaerythritol trimethacrylate, triacrylformal and triallyl isocyanurate.

Among the crosslinkable monomers, bifunctional crosslinkable monomers having 2 polymerizable carbon-carbon double bonds are preferred in that the foamability and processability of the resulting microsphere are easy to be balanced with each other. The bifunctional crosslinkable monomer is preferably a compound having a structure that 2 polymerizable carbon-carbon double bonds are linked directly or indirectly through a flexible chain derived from a diol compound selected from the group consisting of polyethylene glycol, polypropylene glycol, alkyldiols, alkyl ether diols and alkyl ester diols.

Examples of the bifunctional crosslinkable monomer having the structure that 2 polymerizable carbon-carbon double bonds are linked through the flexible chain include polyethylene glycol diacrylate, polyethylene glycol dimethacrylate, polypropylene glycol diacrylate, polypropylene glycol dimethacrylate, alkyldiol diacrylates, alkyldiol dimethacrylates, alkyl ether diol diacrylates, alkyl ether diol dimethacrylates, alkyl ester diol diacrylates, alkyl ester diol dimethacrylates and mixtures of 2 or more compounds thereof.

More specific examples of the bifunctional crosslinkable monomer include polyethylene glycol di(meth)acrylates [containing generally 2 to 15 ethylene oxide units ($-CH_2CH_2O-$)] such as diethylene glycol di(meth)acrylate, triethylene glycol di(meth)acrylate and tetraethylene glycol di(meth)acrylate; polypropylene glycol di(meth)acrylates [containing generally 2 to 20 propylene oxide units ($-CH(CH_3)CH_2O-$) or ($-CH_2CH(CH_3)O-$)] such as dipropylene glycol di(meth) acrylate, tripropylene glycol di(meth)acrylate and tetrapropylene glycol di(meth)acrylate; alkyl diol di(meth)acrylates (whose flexible chain is composed of an aliphatic carbon, and the number of carbon atoms in a linkage portion is generally 2 to 20) such as ethylene glycol di(meth)acrylate, propylene glycol di(meth)acrylate, 1,3-propanediol di(meth)acrylate, 1,4-butanediol di(meth)acrylate, 1,3-butylenediol di(meth)acrylate, 1,6-hexanediol di(meth)acrylate, 1,9-nonanediol di(meth)acrylate, neopentyl glycol di(meth)acrylate, 3-methyl-1,5-pentanediol di(meth)acrylate, 2-methyl-1,8-octanediol di(meth)acrylate, 2,4-diethyl-1,5-pentanediol di(meth)acrylate and 2-hydroxy-1,3-propanediol di(meth)acrylate; alkyl ether diol di(meth)acrylates [whose flexible chain is composed of an aliphatic carbon and an ether bond; in the case where the number of ether bonds is one ($-R_1-O-R_2-$), the respective aliphatic carbons are different] such as 3-oxa-1,6-hexanediol di(meth)acrylate; and alkyl ester diol di(meth)acrylates [whose flexible chain is composed of an aliphatic carbon and an ester bond ($-R_1-COO-R_2-$)] such as hydroxypivalic acid neopentyl glycol di(meth)acrylate. Here, "(meth) acrylate" means an acrylate or methacrylate.

When a bifunctional crosslinkable monomer having such a flexible chain is used as the crosslinkable monomer, the temperature dependence of the elastic modulus of the polymer of the outer shell can be made small while retaining the expansion ratio of the resulting microsphere at a high level. In addition, there can be provided a thermally foamable microsphere hard to cause breakdown of the outer shell and escaping of the encapsulated gas even when shearing force is applied thereto in a processing step such as kneading, calendering, extrusion or injection molding.

The proportion of the crosslinkable monomer used is generally at most 5 parts by weight, preferably 0.01 to 5 parts by weight, more preferably 0.05 to 4 parts by weight, particularly preferably 0.1 to 3 parts by weight per 100 parts by weight of the vinyl monomer. If the proportion of the crosslinkable monomer used is too low, the processability of the resulting microsphere is deteriorated. If the proportion is too high, the thermoplasticity of the polymer forming the outer shell is lowered to encounter difficulty on foaming.

(3) Foaming agent

Examples of the foaming agent include hydrocarbons such as ethane, ethylene, propane, propene, n-butane, isobutane, butene, isobutene, n-pentane, isopentane (i.e., 2-methylbutane), neopentane, isooctane (i.e., 2,2,4-trimethylpentane), n-hexane, isohexane, n-heptane, isododecane (i.e., 2,2,4,6,6-pentamethylheptane) and petroleum ether; chlorofluorocarbons such as $CCl_3F$, $CCl_2F_2$, $CClF_3$ and $CClF_3-CCl_2F_2$; and tetraalkylsilanes such as tetramethylsilane, trimethylethylsilane, trimethyl-isopropylsilane and trimethyl-n-propylsilane. These foaming agents may be used either singly or in any combination thereof.

Among these foaming agents, isobutane, n-butane, n-pentane, isopentane, n-hexane, isohexane, n-heptane, isoheptane, n-octane, isooctane, isododecane, petroleum ether and mixtures of two or more compounds thereof are preferred. A compound that is thermally decomposed by heating into a gaseous state may also be used as the foaming agent.

The proportion of the foaming agent encapsulated in the thermally foamable microsphere is generally 5 to 50% by weight, preferably 7 to 40% by weight based on the whole weight. Accordingly, proportions of the polymerizable monomer and foaming agent used are desirably control in such a manner that the proportions of the polymer of the outer shell and the foaming agent after the polymerization amount to the above-described respective proportions.

(4) Production process of thermally foamable microsphere

The thermally foamable microsphere according to the present invention can be produced by a process of suspension-polymerizing a polymerizable monomer in the presence of a foaming agent in an aqueous dispersion medium containing a dispersion stabilizer. A polymerizable monomer mixture containing at least the polymerizable monomer and the foaming agent is dispersed in the aqueous dispersion medium to form droplets of the oily polymerizable monomer mixture (may be referred to as a droplet-forming step or suspending step in some cases). After the formation of the droplets, the polymerizable monomer is polymerized by using a polymerization initiator. A thermally foamable microsphere having a structure that the foaming agent is encapsulated in an outer shell formed from a polymer formed by the suspension polymerization can be obtained.

As the polymerization initiator, may be used that generally used in this technical field. However, an oil-soluble polymerization initiator that is soluble in the polymerizable monomer is preferred. Examples of such a polymerization initiator include dialkyl peroxides, diacyl peroxides, peroxyesters, peroxydicarbonates and azo compounds.

Specific examples of the polymerization initiator include dialkyl peroxides such as methyl ethyl peroxide, di-t-butyl peroxide and dicumyl peroxide; diacyl peroxides such as isobutyl peroxide, benzoyl peroxide, 2,4-dichlorobenzoyl peroxide and 3,5,5-trimethylhexanoyl peroxide; peroxyesters such as t-butyl peroxypivalate, t-hexyl peroxypivalate, t-butyl peroxyneodecanoate, t-hexyl peroxyneodecanoate, 1-cyclohexyl-1-methylethyl peroxyneodecanoate, 1,1,3,3-tetramethylbutyl peroxyneodecanoate, cumyl peroxyneodecanoate and ($\alpha,\alpha$-bis-neodecanoylperoxy)diisopropylbenzene; peroxydicarbonates such as bis(4-t-butylcyclohexyl) peroxydicarbonate, di-n-propyl oxydicarbonate, diisopropyl peroxydicarbonate, di(2-ethylethylperoxy) dicarbonate, dimethoxybutyl peroxydicarbonate and di(3-methyl-3-methoxybutylperoxy) dicarbonate; and azo compounds such as 2,2'-azobisisobutyronitrile, 2,2'-azobis(4-methoxy-2,4-dimethylvaleronitrile), 2,2'-azobis(2,4-dimethylvaleronitrile) and 1,1'-azobis(1-cyclohexanecarbonitrile).

The polymerization initiator is generally contained in the polymerizable monomer mixture. However, when it is necessary to inhibit premature polymerization, a part or the whole thereof may be added into the aqueous dispersion medium during the droplet-forming step or after the droplet-forming step to shift it into droplets of the polymerizable monomer mixture. The polymerization initiator is generally used in a proportion of 0.0001 to 3% by weight based on the aqueous dispersion medium.

The suspension polymerization is generally conducted in the aqueous dispersion medium containing the dispersion stabilizer. As examples of the dispersion stabilizer, may be mentioned silica, calcium phosphate, magnesium hydroxide, aluminum hydroxide, ferric hydroxide, barium sulfate, calcium sulfate, sodium sulfate, calcium oxalate, calcium carbonate, barium carbonate and magnesium carbonate. These dispersion stabilizers may be used either singly or in any combination thereof. The dispersion stabilizer is generally used in a proportion of 0.1 to 20 parts by weight per 100 parts by weight of the polymerizable monomer.

In addition to the dispersion stabilizer, for example, condensation products of diethanolamine and an aliphatic dicarboxylic acid, condensation products of urea and formaldehyde, polyvinyl pyrrolidone, polyethylene oxide, polyethylene imine, tetramethylammonium hydroxide, gelatin, methyl cellulose, polyvinyl alcohol, dioctyl sulfosuccinate, sorbitan esters and various kinds of emulsifiers may be used as dispersion aids (also referred to as dispersion co-stabilizers).

The aqueous dispersion medium containing the dispersion stabilizer is generally prepared by adding the dispersion stabilizer and the dispersion aid into water such as deionized water. The pH of the aqueous phase upon the polymerization is suitably determined according to the kinds of the dispersion stabilizer and dispersion aid used. For example, when silica such as colloidal silica is used as the dispersion stabilizer, the polymerization is conducted under acidic conditions. In order to acidify the aqueous dispersion medium, a method, in which an acid is added as needed to adjust the pH of the aqueous dispersion medium to about 3 to 4, is adopted. When magnesium hydroxide or calcium phosphate is used as the dispersion stabilizer, the polymerization is conducted under alkaline conditions.

A preferable combination of the dispersion stabilizers includes a combination of colloidal silica and a condensation product. The condensation product is preferably a condensation product of diethanolamine and an aliphatic dicarboxylic acid, particularly preferably a condensation product of diethanolamine and adipic acid or condensation product of diethanolamine and itaconic acid. The acid value (mg KOH/g) of the condensation product is preferably not lower than 60, but lower than 95, more preferably 65 to 90. When an inorganic salt such as sodium chloride or sodium sulfate is further added as a dispersion aid, a thermally foamable microsphere having an evener particle form is easy to be obtained. As the inorganic salt, is preferably used common salt.

The amount of the colloidal silica used varies according to the particle diameter thereof. However, the colloidal silica is used in a proportion of generally 1 to 20 parts by weight, preferably 2 to 15 parts by weight per 100 parts by weight of the polymerizable monomer. The condensation product is used in a proportion of generally 0.05 to 2 parts by weight per 100 parts by weight of the polymerizable monomer. The inorganic salt is used in a proportion of generally 0 to 150 parts by weight, preferably 50 to 100 parts by weight per 100 parts by weight of the polymerizable monomer.

Other preferable combinations of the dispersion stabilizers include combinations of colloidal silica and a water-soluble nitrogen-containing compound. Examples of water-soluble nitrogen-containing compound include polyvinyl pyrrolidone, polyethylene imine, polyoxyethylene alkylamines, polydialkylaminoalkyl (meth)acrylates typified by polydimethylaminoethyl methacrylate and polydimethylaminoethyl acrylate, polydialkylaminoalkyl (meth)acrylamides typified by polydimethylaminopropyl acrylamide and polydimethylaminopropyl methacrylamide, polyacrylamide, cationic polyacrylamide, polyamine sulfone, and polyallylamine. Among these, a combination of colloidal silica and polyvinyl pyrrolidone is preferably used. In addition, further preferable combinations include combinations of magnesium hydroxide and/or calcium phosphate and an emulsifier.

As the dispersion stabilizer, may be used colloid of a hardly water-soluble metal hydroxide (for example, magnesium hydroxide) obtained by a reaction of a water-soluble polyvalent metal salt compound (for example, magnesium chloride) with an alkali metal hydroxide (for example, sodium hydroxide) in an aqueous phase. As the calcium phosphate, may be used a reaction product of sodium phosphate with calcium chloride in an aqueous phase. No emulsifier is generally used. If desired, however, anionic surfactants, for example, salts of dialkyl sulfosuccinic acid and phosphoric esters of polyoxyethylene alkyl (allyl) ethers may also be used.

As a polymerization aid, at least one compound selected from the group consisting of alkali metal nitrites, stanous chloride, stannic chloride, water-soluble ascorbic acids and boric acid may also be caused to exist in the aqueous dispersion medium. When the suspension polymerization is conducted in the presence of these compounds, no aggregation of polymer particles formed occurs upon the polymerization, and the polymer does not adhere to the wall of a polymerization vessel, so that the thermally foamable microsphere can be stably produced-while efficiently removing heat generated by the polymerization.

Among the alkaline metal nitrites, sodium nitrite and potassium nitrite are preferred from the viewpoints of easy availability and price. The ascorbic acids include ascorbic acid, metal salts of ascorbic acid and esters of ascorbic acid. Among these, water-soluble ones are preferably used. In the present invention, the water-soluble ascorbic acids mean those having a solubility of at least 1 g/100 cm$^3$ in water of 23°C. Among these, L-ascorbic acid (vitamin C), sodium ascorbate and potassium ascorbate are particularly preferably used from the viewpoints of easy availability, price, and action and effect. These compounds are used in a proportion of generally 0.001 to 1 part by weight, preferably 0.01 to 0.1 part by weight per 100 parts by weight of the polymerizable monomer.

The order that the respective components are added to the aqueous dispersion medium is optional. However, water and the dispersion stabilizer, and optionally the dispersion aid and polymerization aid are generally added to one another to prepare an aqueous dispersion medium containing the dispersion stabilizer. The foaming agent, vinyl monomer and crosslinkable monomer may be added separately to the aqueous dispersion medium to unite them in the aqueous dispersion medium, thereby form a polymerizable monomer mixture. However, these components are generally mixed in advance, and the resultant mixture is then added into the aqueous dispersion medium. The polymerization initiator may be added for use to the polymerizable monomer in advance. When there is need of avoiding premature polymerization, however, for example, the polymerizable monomer mixture may be added into the aqueous dispersion medium, and the polymerization initiator may be then added with stirring to unite them in the aqueous dispersion medium. The mixing of the polymerizable monomer mixture with the aqueous dispersion medium may be conducted in a separate container to stir and mix the resultant mixture in a stirring machine or dispersing machine having high shearing force, and the mixture may be then charged into a polymerization vessel.

The polymerizable monomer mixture and the aqueous dispersion medium are stirred and mixed, thereby forming droplets of the polymerizable monomer mixture in the aqueous dispersion medium. The average droplet diameter of the droplets is preferably caused to substantially consist with the intended average particle diameter of the resulting thermally foamable microspheres and is generally 1 to 200 $\mu$m, preferably 3 to 150 $\mu$m, particularly preferably 5 to 100 $\mu$m. In order to obtain thermally foamable microspheres having an extremely sharp particle diameter distribution, it is preferable to adopt a process, in which the aqueous dispersion medium and the polymerizable monomer mixture are fed into a continuous high-speed rotation and high-shearing type stirring and dispersing machine, both components are continuously stirred and dispersed in the stirring and dispersing machine, the resultant liquid dispersion is poured into a polymerization vessel, and suspension polymerization is conducted in the polymerization vessel. After the polymerizable monomer mixture is added into the aqueous dispersion medium, stirring and mixing may be conducted in a batch-wise high-speed rotation and high-shearing type dispersing machine to form droplets.

The suspension polymerization is generally conducted at a temperature raised to 30 to 100°C after the interior of the reaction vessel is deaerated or purged with an inert gas. During the suspension polymerization, the polymerization temperature may be controlled to a fixed temperature or raised stepwise to conduct the polymerization. After the suspension polymerization, the reaction mixture containing thermally foamable microspheres formed is treated by a method such as filtration, centrifugation or precipitation to separate the thermally foamable microspheres from the reaction mixture. After the suspension polymerization, an acid treatment or alkali treatment may be conducted to solubilize the dispersion stabilizer. The thermally foamable microspheres separated are washed and filtered and then recovered in a state of wet cake. The thermally foamable microspheres are dried at a comparatively low temperature, at which no foaming is initiated, as needed.

(5) Thermally foamable microsphere reduced in the content of ionic impurities

Examples of ionic impurities contained in the thermally foamable microsphere include ions (alkali metal ions) of metals of Group 1A of the periodic table, such as a sodium ion and a potassium ion; ions (alkaline earth metal ions in a broad sense) of metals of Group 2A of the periodic table, such as a magnesium ion and a calcium ion; and halide ions such as a chlorine ion or chloride ion and a fluorine ion or fluoride ion. The sodium ion, magnesium ion and chloride ion are representative of the ionic impurities. Many of these ionic impurities are derived from magnesium hydroxide colloid used as the dispersion stabilizer, inorganic salts used as the dispersion aid, such as sodium chloride and sodium sulfate, and vinylidene chloride used as the polymerizable monomer.

In the production process according to the present invention, washing is conducted in the washing step after the polymerization until the electric conductivity of the thermally foamable microsphere reaches a desired level. No sufficient washing has heretofore been conducted under the circumstances from the reasons that problems caused by the ionic impurities contained in the thermally foamable microsphere have not been sufficiently recognized, and that when the number of times of water washing, or the amount of washing water used is increased, the time required of filtration is lengthened, and so productivity is lowered, and the amount of waste water is increased.

The present inventor has found that a certain relationship resides between the electric conductivity of the thermally foamable microsphere and the content of the ionic impurities. The electric conductivity of the thermally foamable microsphere means an electric conductivity of a water extract obtained by extraction of the thermally foamable microsphere with water. A method for measuring the electric conductivity of the water extract of the thermally foamable microsphere is as follows.

More specifically, a water extract is obtained by the following Steps 1 and 2:

(1) Step 1 of dispersing 5 g of the thermally foamable microsphere in 20 g of ion-exchanged water having a pH of 7 and an electric conductivity of σ1 at a temperature of 25°C to prepare a liquid dispersion; and
(2) Step 2 of shaking the liquid dispersion at the same temperature for 30 minutes to conduct a water extraction treatment.

The electric conductivity of this water extract (liquid phase) as measured at 25°C (25 ± 0.2°C) is regarded as σ2.

As the ion-exchanged water, is used ion-exchanged water whose pH is adjusted to 7 (7 ± 0.3) by a cation-exchange treatment and an anion-exchange treatment. The pH of the ion-exchanged water is measured by means of a pH meter. The electric conductivity of the ion-exchanged water having a pH of 7 as measured at 25°C is regarded as σ1. A difference σ2 - σ1 between the electric conductivity σ2 of the water extract and the electric conductivity σ1 of the ion-exchanged water is determined. The electric conductivity is measured by means of a conductivity meter.

This difference σ2 - σ1 is at most 1 mS/cm (1,000 μS/cm), preferably at most 0.5 mS/cm (500 μS/cm), more preferably at most 0.1 mS/cm (100 μS/cm), particularly preferably at most 0.05 mS/cm (50 μS/cm). In use applications of which a thermally foamable microsphere having an extremely high purity is required, this difference σ2 - σ1 can be reduced to at most 0.03 mS/cm (30 μS/cm), further preferably at most 0.02 mS/cm (20 μS/cm) or at most 0.01 mS/cm (10 μS/cm).

The electric conductivity of the thermally foamable microsphere is reduced as described above, whereby the content of the ionic impurities can be reduced. The content of the ionic impurities in the thermally foamable microsphere can be determined by a method, in which 1 g of the thermally foamable microsphere is dispersed in 50 ml of ultrapure water, the concentration of ionic impurities in a hot water extract obtained by extraction at 40°C for 1 hour was measured by ion chromatography, and an ion content (μg/g) per gram of the thermally foamable microsphere is calculated out. The ultrapure water is water the content of an ionic component in which is substantially zero. The unit μg/g of the ion content corresponds to ppm in terms of a fraction to the thermally foamable microsphere.

For example, a sodium ion is desirably reduced to generally at most 1,000 μg/g, preferably at most 700 μg/g, more preferably at most 500 μg/g, particularly preferably at most 300 μg/g. When a thermally foamable microsphere having an extremely high purity is desired, the content of the sodium ion can be reduced to at most 100 μg/g, further preferably at most 50 μg/g or 30 μg/g. The contents of other alkali metal ions than the sodium ion and ions of metals of Group 2A of the periodic table, such as a magnesium ion, are also preferably reduced to the same level as the sodium ion.

Halide ions such as a chloride ion are desirably reduced to generally at most 1,500 μg/g, preferably at most 1,000 μg/g, more preferably at most 500 μg/g, particularly preferably at most 300 μg/g. When a thermally foamable microsphere having an extremely high purity is desired, the content of the halide ions such as a chloride ion can be reduced to at most 200 μg/g, further preferably at most 100 μg/g or 50 μg/g.

The content of the ionic impurities falls within the above range, whereby the corrosion of metals can be prevented, and the contamination of electronic parts can be inhibited. The content of the ionic impurities can be suitably controlled according to the use applications of the thermally foamable microsphere.

The present inventor has found a process for producing a thermally foamable microsphere, which comprises a polymerization step of suspension-polymerizing a polymerizable monomer mixture containing at least a foaming agent and a polymerizable monomer in an aqueous dispersion medium to synthesize a thermally foamable microsphere having a structure that the foaming agent is encapsulated in an outer shell formed from a polymer formed, and a washing step of washing the thermally foamable microsphere, wherein washing with ion-exchanged water and filtration are conducted in the washing step, and at this time an electric conductivity of a filtrate is measured to obtain a thermally foamable microsphere exhibiting a desired electric conductivity on the basis of a previously prepared relational expression between the electric conductivity of the filtrate and the electric conductivity of a water extract of the thermally foamable microsphere. As the ion-exchanged water, is preferably used ion-exchanged water having a pH of about 7.

Here, the electric conductivity of the thermally foamable microsphere is an electric conductivity of a water extract obtained by the measurement by the same method as described above. The measurements of the electric conductivity of the filtrate and the electric conductivity of the water extract of the thermally foamable microsphere are desirably conducted at the same measuring temperature. The measuring temperature is preferably controlled to 25°C (25 ± 0.2°C) as described above. With respect to the filtration in the washing step, any means such as natural filtration, suction filtration or centrifugation may be adopted.

In the washing step, the aqueous dispersion containing the thermally foamable microsphere obtained in the polymerization step is filtered, a wet cake containing the thermally foamable microsphere is brought into contact with ion-exchanged water to conduct washing, and washings after the washing are filtered. Ionic impurities are contained in a filtrate obtained by the filtration. In the washing step, the washing may be conducted by either a batch system or a continuous system.

When a batch-wise washing step is adopted, for example, the aqueous dispersion containing the thermally foamable microsphere obtained in the polymerization step is filtered through a filter, ion-exchanged water is then introduced into a cake containing the thermally foamable microsphere to conduct washing, and washings are filtered. The washing with ion-exchanged water and filtration are generally conducted repeatedly several times. In every washing, the electric conductivity of the filtrate is measured to obtain a thermally foamable microsphere exhibiting a desired electric conductivity on the basis of a previously prepared relational expression between the electric conductivity of the filtrate and the electric conductivity of the water extract of the thermally foamable microsphere. According to this process, the thermally foamable microsphere exhibiting the desired electric conductivity can be obtained on the basis of the electric conductivity of the filtrate, so that the amount of the ion-exchanged water used in the washing and the number of times of the washing can be controlled to the minimum. According to this process, products having a fixed quality can be produced.

When a continuous washing step is adopted, for example, the aqueous dispersion containing the thermally foamable microsphere obtained in the polymerization step is introduced into a centrifugal dehydrator to conduct dehydration by centrifugation, and the dehydration is then conducted by centrifugation while continuously showering a cake containing the thermally foamable microsphere in the centrifugal dehydrator with ion-exchanged water. A filtrate obtained by the dehydration is continuously or intermittently sampled to measure the electric conductivity thereof. According to this process, a thermally foamable microsphere exhibiting a desired electric conductivity can be obtained on the basis of the electric conductivity of the filtrate, so that the amount of the ion-exchanged water used in the washing and the washing time can be controlled to the minimum. According to this process, products having a fixed quality can be produced.

As another example of the continuous washing process, is mentioned a process, in which the aqueous dispersion containing the thermally foamable microsphere obtained in the polymerization step is fed to a vacuum belt filter equipped with an endless filter fabric capable of traveling round a filtration treatment zone, and the formation of a cake by filtration of the aqueous dispersion on the filter fabric, the washing of the cake by showering with ion-exchanged water and the vacuum dehydration of the cake are successively conducted in the filtration treatment zone in which the endless filter fabric travels in a horizontal direction. A filtrate obtained by the vacuum dehydration is continuously or intermittently sampled to measure the electric conductivity thereof.

The relational expression between the electric conductivity of the filtrate and the electric conductivity of the water extract of the thermally foamable microsphere can be obtained by using the measured results of the electric conductivities thereof as a data base and subjecting the data base to regression analysis, thereby preparing a relational expression of a linear model, double logarithmic model or semilogarithmic model. Among these models, the relational expression of the linear model represented by the following expression (1), in which the electric conductivity x of the filtrate is defined as an independent variable, and the electric conductivity y of the water extract of the thermally foamable microsphere is defined as a dependent variable,

$$y = \alpha + \beta x \qquad (1)$$

wherein $\alpha$ and $\beta$ are parameters, is suitable.

The respective parameters of the relational expression (1) vary according to the kind of the polymerizable monomer used in the polymerization, the kinds and amounts of the dispersion stabilizer and dispersion aid, the amount of the washing water used, etc. Therefore, these parameter are determined according to polymerization conditions and washing conditions. When a specified polymerization formulation is established, the same relational expression may be fundamentally used.

When the intended electric conductivity of the thermally foamable microsphere is substituted into this relational expression (1), the electric conductivity of the filtrate corresponding thereto can be calculated out. Accordingly, the electric conductivity of the filtrate is monitored in the washing step, whereby the amount of the washing water used and the number of times of the washing can be controlled, and lowering of efficiency and increase of cost by excess washing can be inhibited. To the contrary, the electric conductivity of the filtrate is measured, whereby the electric conductivity of the thermally foamable microsphere, and in turn the content of ionic impurities such as a sodium ion and chloride ion can be predicted, so that high quality control can be conducted by a simple method.

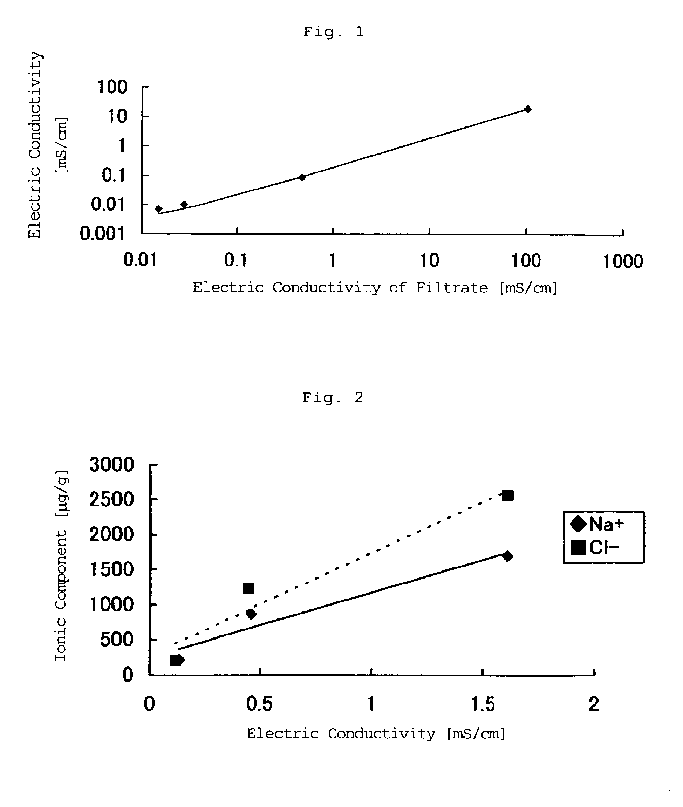

The relational expression (1) may be used in the measurement of the electric conductivity of the thermally foamable microsphere as it is. However, it may be graphed as illustrated in FIG. 1. The electric conductivity of the thermally foamable microsphere can be read from the measured value of the electric conductivity of the filtrate on the basis of the graph shown in FIG. 1.

As illustrated in FIG. 2, a linear relationship generally resides between the electric conductivity of the thermally foamable microsphere and each content of a sodium ion ($Na^+$) and a chlorine ion ($Cl^-$), so that the content of the sodium ion and/or the chloride ion can be predicted on the basis of the measured value of the electric conductivity of the thermally foamable microsphere. The same shall apply to other ionic impurities. Such a relational expression of the linear model as described above can also be prepared by regression analysis on the basis of the measured data of the electric conductivity of the thermally foamable microsphere and the content of the ionic impurities. If desired, such a relational expression of the linear model as described above can also be prepared by regression analysis on the basis of the measured data of the electric conductivity of the filtrate and the content of the ionic impurities.

The thermally foamable microsphere obtained in such a manner may be surface-treated with various kinds of compounds. In addition, inorganic fine powder may be caused to adhere to the surfaces of the thermally foamable microspheres to prevent aggregation between particles. Furthermore, the surfaces of the thermally foamable microspheres may be coated with various materials.

The thermally foamable microsphere according to the present invention has a structure that a foaming agent is encapsulated in an outer shell formed from a polymer. The polymer forming the outer shell is formed by polymerization of a polymerizable monomer (mainly, vinyl monomer). When the vinyl monomer and a crosslinkable monomer are used in combination, the temperature dependence of the elastic modulus of the shell polymer can be made small.

Preferably a vinylidene chloride (co)polymer or (meth)acrylonitrile (co)polymer, more preferably a vinylidene chloride copolymer and a (meth)acrylonitrile copolymer, particularly preferably a (meth)acrylonitrile copolymer is used as the polymer, whereby an outer shell improved in gas barrier properties and having excellent heat resistance and solvent resistance can be formed. When a bound halogen-containing polymerizable monomer such as vinylidene chloride is not used at all as the polymerizable monomer, or the proportion used is low, the formation of a halide ion such as a chloride ion attributable to a dechlorination reaction can be inhibited.

Since vinylidene chloride is commonly used as the bound halogen-containing polymerizable monomer, a chloride ion is often contained in the resulting thermally foamable microsphere.

Even a thermally foamable microsphere low in the electric conductivity at ordinary temperature (25°C) and in the content of a halide ion such as a chloride ion causes a dehalogenation reaction when heated to a high temperature, and shows a tendency to rapidly increase the amount of the halide ion. The thermally foamable microsphere according to the present invention is preferably low in the concentration of the halide ion by the dehalogenation reaction at a high temperature. Since vinylidene chloride is commonly used as a halogen atom-containing polymerizable monomer, a chloride ion is often contained in the resulting thermally foamable microsphere. Accordingly, the thermally foamable microsphere according to the present invention is more preferably low in the concentration of the chloride ion by the dechlorination reaction at a high temperature.

Specifically, a thermally foamable microsphere low in a ratio of the content of chlorine in the case where hot water extraction was conducted at 120°C to the content of a chloride ion in the case where hot water extraction was conducted at 40°C as measured by the following procedure is preferred. More specifically, the contents ($\mu$g/g) of a halide ion per gram of the thermally foamable microsphere are measured by the following Steps I to III:

(I) Step I of dispersing 1 g of the thermally foamable microsphere in 50 ml of ultrapure water at a temperature of 25°C to prepare a liquid dispersion;
(II) Step II of heating the liquid dispersion to respective temperatures of 40°C and 120°C to conduct hot water extraction treatments for 1 hour; and
(III) Step III of cooling the respective hot water extracts and then measuring halide ion concentrations in the respective hot water extracts at 25°C by ion chromatography, and the ratio B/A of the halide ion content B in the case where the hot water extraction treatment was conducted at the temperature of 120°C to the halide ion content A in the case where the hot water extraction treatment was conducted at the temperature of 40°C is calculated out.

A closed container or open container is used to conduct the hot water extraction treatment by dispersing 1 g of the thermally foamable microsphere in 50 ml of ultrapure water and heating the liquid dispersion for 1 hour at 40°C. When the open container is used to conduct the extraction treatment, ultrapure water is added in an amount equal to the amount of water evaporated after the heat treatment for 1 hour, and the measurement is then conducted by ion chromatography after cooled to 25°C (25 $\pm$ 0.2°C) .

A closed container is generally used to conduct the hot water extraction treatment by dispersing 1 g of the thermally foamable microsphere in 50 ml of ultrapure water and heating the liquid dispersion for 1 hour at 120°C. After the hot water extraction treatment, the halide ion concentration is measured by ion chromatography after the hot water extract is cooled to 25°C (25 $\pm$ 0.2°C). These halide ion concentrations are converted to contents ($\mu$g/g) per gram of the thermally foamable microsphere. Since the halide ion is often a chloride ion, the above-described process may be suitably applied to a process for measuring a chloride ion concentration as the halide ion concentration.

The halide ions such as a chloride ion include those derived from the dispersion stabilizer, dispersion aid, polymerization aid, etc. and those attributable to the use of the polymerizable monomer. When a chlorine atom-containing polymerizable monomer such as vinylidene chloride is used as the polymerizable monomer, a chloride ion concentration at a high temperature markedly increases. The thermally foamable microsphere is heated to a high temperature upon foaming by heating. Further, the thermally foamable microsphere may be melted and kneaded in some cases when kneaded with a polymeric material. The chloride ion formed by heating becomes a causative substance of corrosion and contamination.

In the thermally foamable microsphere according to the present invention, the ratio B/A of the halide ion (for example, chloride ion) content B in the case where the hot water extraction treatment was conducted at the temperature of 120°C to the halide ion content A in the case where the hot water extraction treatment was conducted at the temperature of 40°C is preferably at most 50 times, more preferably at most 30 times, particularly preferably at most 10 times. When the thermally foamable microsphere is applied to a use application in which a thermally foamable microsphere extremely low in the content of a halide ion attributable to a dehalogenation reaction (for example, dechlorination reaction) at a high temperature is desired, the ratio B/A is desirably at most 5 times, further at most 3 times.

No particular limitation is imposed on the average particle diameter of the thermally foamable microspheres according to the present invention. However, the average particle diameter is generally 1 to 200 $\mu$m, preferably 3 to 150 $\mu$m, particularly preferably 5 to 100 $\mu$m. If the average particle diameter of the thermally foamable microspheres is too small, such thermally foamable microspheres come to have insufficient foamability. If the average particle diameter of the thermally foamable microspheres is too great, such thermally foamable microspheres are not preferred because surface smoothness is impaired in fields of which a beautiful appearance is required. In addition, the resistance to shearing force upon processing also becomes insufficient.

The content of the foaming agent in the thermally foamable microsphere according to the present invention is generally 5 to 50% by weight, preferably 7 to 40% by weight based on the whole weight. If the content of the foaming agent is too low, the expansion ratio of such a thermally foamable microsphere becomes insufficient. If the content is too high, the thickness of the outer shell becomes too thin, so that such a thermally foamable microsphere tends to cause premature foaming and breakdown of the outer shell due to shearing force under heating upon processing.

(6) Use applications

The thermally foamable microspheres according to the present invention are used in various fields after they are thermally foamed (thermally expanded) or as they are kept unfoamed. The thermally foamable microspheres are used as, for example, fillers for paints for automobiles and the like; foaming agents for wallpapers and foaming inks (for applying relief patterns to T-shirts and the like); and shrink-preventing agents making good use of their expanding ability.

The thermally foamable microspheres according to the present invention are used for the purpose of reducing the weights of polymeric materials such as synthetic resins (thermoplastic resins and thermosetting resins) and rubbers, paints, ultralight weight paper, various materials, etc., making them porous and imparting various functionalities (for example, chipping resistance for automobiles, insulating property for metal cables, electrical wires and metal contacts, slip property, heat insulating property, cushioning property, sound insulating property, etc.) making good use of their volume increase by foaming. Examples of the polymeric materials include polyethylene, polypropylene, polystyrene, ABS resins, styrene-butadienestyrene block copolymers (SBS), styrene-isoprene-styrene block copolymers (SIS), hydrogenated SBS, hydrogenated SIS, natural rubber, various kinds of synthetic rubbers, and thermoplastic polyurethane.

The thermally foamable microspheres according to the present invention can be preferably used in the fields of paints, wallpapers and inks, of which surface properties and smoothness are required. The thermally foamable microspheres according to the present invention can be suitably applied to application fields of which a processing step such as kneading, calendering, extrusion or injection molding is required.

As described above, the thermally foamable microspheres according to the present invention can be used as foaming agents or mixed with polymeric materials into compositions. The thermally foamable microspheres according to the present invention can be kneaded together with thermoplastic resins as they are kept unfoamed, thereby forming pellets. The thermally foamable microspheres according to the present invention can be incorporated into polymeric materials, paints, inks, aqueous media and the like and foamed by heating to provide articles (for example, foamed moldings, foamed coating films and foamed inks) containing foamed particles.

The thermally foamable microspheres according to the present invention can be used for the purpose of developing the function of a colorant such as a dye, perfume base, insecticide, antimicrobial agent, or the like by dissolving or dispersing such a substance in the foaming agent. The thermally foamable microspheres having such a function can also be used as they are kept unfoamed.

The thermally foamable microspheres according to the present invention can be added into adhesives or pressure sensitive adhesives. An adhesive or pressure sensitive adhesive sheet obtained by forming a thermally expandable adhesive or pressure sensitive adhesive layer containing the thermally foamable microspheres on one surface or both surfaces of a base material such as a synthetic resin film or paper can be easily released from an adherend by heating and foaming the thermally foamable microspheres.

As described above, the thermally foamable microspheres according to the present invention can be dispersed in polymeric materials, paints, adhesives or pressure sensitive adhesives, inks or aqueous media as they are kept unfoamed or as foamed particles, thereby preparing compositions.

The aqueous medium means water alone or a water medium containing various kinds of additives as needed. When the aqueous medium is composed of water alone in particular, the composition is suitably used as a raw composition (slurry) for various use applications.

The thermally foamable microspheres according to the present invention are excellent in a corrosion-preventing effect without adding an ion adsorbent or corrosion inhibitor. However, an ion adsorbent, such as a higher fatty acid salt such as calcium stearate, or a hydrotalcite compound; a corrosion inhibitor such as sodium nitrite, sodium chromate, benzotriazole or octadecylamine, or the like may be added for use applications of which an extremely high corrosion-preventing effect or ion contamination-preventing effect is required, as needed.

EXAMPLES

The present invention will hereinafter be described more specifically by the following Examples and Comparative Examples.

<Measuring methods>

(1) Foaming start temperature and maximum foaming temperature

TMA measurement was conducted by means of a TMA-7 model manufactured by Perkin Elmer Co. About 0.25 mg of a sample was used, and its temperature was raised at a heating rate of 5°C/min to observe its foaming behavior. More specifically, the sample (thermally foamable microspheres) was placed in a container, and its temperature was raised at a heating rate of 5°C/min to continuously measure changes in its height. A temperature, at which the change in its height started, was regarded as a foaming start temperature ($T_{start}$), and a temperature, at which the height became maximum, was regarded as a maximum foaming temperature ($T_{max}$).

(2) Expansion ratio

Thermally foamable microspheres (0.7 g) were placed in a Geer oven and heated for 2 minutes at a prescribed temperature (foaming temperature) to foam them. The resultant foams were placed in a graduated cylinder to measure their volume. The volume of the foams was divided by the volume of the thermally foamable microspheres before the foaming to calculate out an expansion ratio.

(3) Average particle diameter

The particle diameter distribution of thermally foamable microspheres was measured by means of a particle diameter distribution meter SALD-3000J manufactured by Shimadzu Corporation to indicate an average particle diameter ($\mu$m) in terms of a median diameter thereof.

(4) pH and electric conductivity of ion-exchanged water

Water was subjected to a cation-exchange treatment and an anion-exchange treatment to prepare ion-exchanged water having a pH of 7 (7 $\pm$ 0.3). The pH was measured by means of a pH meter. A conductivity meter (manufactured by HORIBA, Ltd.) was used to measure an electric conductivity $\sigma 1$ of the ion-exchanged water at 25°C (25 $\pm$ 0.2°C).

(5) Electric conductivity of water extract

Measurement of an electric conductivity of a water extract of thermally foamable microspheres was conducted in accordance with the following procedure. With respect to a water extract obtained by Step 1 of dispersing 5 g of the thermally foamable microsphere in 20 g of ion-exchanged water having a pH of 7 and an electric conductivity of $\sigma 1$ at a temperature of 25°C to prepare a liquid dispersion; and Step 2 of shaking the liquid dispersion at the same temperature for 30 minutes to conduct a water extraction treatment, the electric conductivity as measured at 25°C was regarded as $\sigma 2$, and a difference $\sigma 2 - \sigma 1$ between $\sigma 2$ and $\sigma 1$ was determined.

(6) Content of ionic impurities

The content of ionic impurities in thermally foamable microspheres was measured by a method in which 1 g of the thermally foamable microspheres were dispersed in 50 ml of ultrapure water to conduct extraction at 40°C for 1 hour, and concentrations of respective ions in the thus-obtained hot water extract were measured by ion chromatography. A closed container or open container is used to conduct the hot water extraction treatment by heating for 1 hour at 40°C. When the open container was used to conduct the extraction treatment, ultrapure water was added in an amount equal

14

to the amount of water evaporated after the heat treatment for 1 hour, and the measurement was then conducted by ion chromatography after cooled to 25°C (25 ± 0.2°C).

The concentrations of the respective ions were indicated as contents ($\mu$g/g) per gram of the thermally foamable microspheres. The measurement by the ion chromatography was conducted at 25°C (25 ± 0.2°C). As the ultrapure water, was used water the content of an ionic component in which was substantially zero. The ion chromatograph used was IC-500P (manufactured by Yokogawa Electric Corporation). The measuring conditions are as follows.

Column: Pre-column PAM3-025, separation column SAM1-125 Eluent: 4.4 mM $Na_2O_3$/1.2 mM $NaHCO_3$
Flow rate of eluent: 2 ml/min
Removing liquid: 15 mM $H_2SO_4$
Flow rate of removing liquid: 2 ml/min

(7) Ratio B/A between chloride ion contents

The ratio B/A of the chloride ion content B in the case where the hot water extraction treatment was conducted at a temperature of 120°C to the chloride ion content A in the case where the hot water extraction treatment was conducted at a temperature of 40°C was determined in accordance with the following method. The hot water extraction treatment and measurement of the chloride ion content at the temperature of 40°C were respectively conducted in accordance with the same methods as described above. On the other hand, a closed container was used to conduct the hot water extraction treatment by heating for 1 hour at 120°C. After the hot water extraction treatment, a chloride ion concentration was measured by ion chromatography after the hot water extract was cooled to 25°C (25 ± 0.2°C). These chloride ion concentrations were converted to contents ($\mu$g/g) per gram of the thermally foamable microsphere to calculate out a ratio B/A between both contents.

Example 1

A polymerization vessel (1.5 liters) equipped with a stirrer was charged with 11 g of colloidal silica (27.5 g of liquid silica dispersion having a solid content of 40% by weight), 1.28 g of a condensation product (2.56 g of a solution having a concentration of 50% by weight, acid value: 78 mg KOH/g) of diethanolamine and adipic acid, 195.4 g of common salt (NaCl), 0.32 g of sodium nitrite and ion-exchanged water in an amount sufficient to amount to 868 g in total, thereby preparing an aqueous dispersion medium. Hydrochloric acid was added to this aqueous dispersion medium to adjust its pH to 3.2.

On the other hand, an oily mixture composed of 147.4 g of acrylonitrile, 68.2 g of methacrylonitrile, 4.4 g of methyl methacrylate, 3.3 g of diethylene glycol dimethacrylate, 22 g of isopentane and 44 g of isooctane was prepared. This oily mixture and the above-prepared aqueous dispersion medium were stirred and mixed in a batch-wise high-speed rotation and high-shearing type dispersing machine to form minute droplets of the oily mixture.

The aqueous dispersion medium containing the minute droplets of the oily mixture was charged into a polymerization vessel (1.5 liters) equipped with a stirrer to conduct a reaction for 20 hours at 60°C in a warm water bath. The resultant reaction product was suction-filtered. At the time mother liquor had scarcely gone out, about 300 g of ion-exchanged water was added, and suction filtration was conducted. This operation was repeated several times to measure electric conductivities of respective filtrates and filter cakes after drying. Each filter cake was air-dried by leaving it to stand for a day. The thus-obtained thermally foamable microspheres had an average particle diameter of 33 $\mu$m, a foaming start temperature of 130°C, a maximum expansion ratio of 85 times and an expansion ratio at 200°C of 60 times.

The relationship between the electric conductivity of the filtrate and the electric conductivity of the water extract of the thermally foamable microspheres is shown in Table 1 and FIG. 1. These measured results were used as a data base to conduct regression analysis. As a result, the following relational expression (1a) of a linear model was obtained.

$$y = 0.00198 + 0.183713x \qquad (1a)$$

Table 1

| | Mother liquor | First water washing | Second water washing | Third water washing | Fourth water washing |
|---|---|---|---|---|---|
| Electric conductivity of thermally foamable microspheres [mS/cm] | - | 19.2 | 0.085 | 0.010 | 0.007 |
| Electric conductivity of filtrate [mS/cm] | 182.8 | 104.5 | 0.48 | 0.028 | 0.015 |

From the above results, it is understood that there is a correlation between the electric conductivity of the filtrate and the electric conductivity of the thermally foamable microspheres, and so the electric conductivity of the thermally foamable microspheres can be predicted by measuring the electric conductivity of the filtrate.

Example 2

Thermally foamable microspheres were obtained in the same manner as in Example 1, and the degree of the washing was varied to prepare samples. The relationship between the electric conductivities of the respective thermally foamable microsphere samples and the ionic components are shown in Table 2 and FIG. 2.

Table 2

| Sample | 1 | 2 | 3 |
|---|---|---|---|
| Electric conductivity of thermally foamable microspheres [mS/cm] | 0.135 | 0.460 | 1.610 |
| $Na^4$ content [$\mu$g/g] | 220 | 870 | 1700 |
| $Cl^-$ content [$\mu$g/g] | 300 | 1300 | 2600 |

From the above results, it is understood that there is a correlation between the electric conductivity of the thermally foamable microspheres and the content of the ionic component, and so the content of the ionic component can be predicted from the electric conductivity of the thermally foamable microspheres.

Example 3

Eleven grams of colloidal silica having a solid content of 40% by weight was added to 770 g of deionized water in a polymerization vessel (1.5 liters) equipped with a stirrer to dissolve the silica. Hydrochloric acid was additionally added to prepare an aqueous dispersion medium having a pH of 3.5. On the other hand, an oily mixture composed of 123.2 g of vinylidene chloride, 85.8 g of acrylonitrile, 11 g of methyl methacrylate, 0.33 g of trimethylolpropane trimethacrylate, 1.1 g of 2,2'-azobis-2,4-dimethylvaleronitrile and 35.2 g of butane was prepared (part by weight ratio of vinylidene chloride/acrylonitrile/methyl methacrylate = 56/39/5). After this oily mixture and the above-prepared aqueous dispersion medium were stirred and mixed in a batch-wise high-speed rotation and high-shearing type dispersing machine to form minute droplets of the oily mixture, the resultant mixture was charged into the polymerization vessel to conduct a reaction for 22 hours at 50°C.

The resultant reaction product was suction-filtered and washed twice with 300 g of ion-exchanged water. The thus-obtained thermally foamable microspheres had an average particle diameter of 11 $\mu$m, a foaming start temperature of 85°C, a maximum expansion ratio of 60 times, an expansion ratio at 130°C of 48 times and an electric conductivity of 0.3 mS/cm.

One gram of the thus-obtained thermally foamable microspheres were dispersed in 50 ml of ultrapure water to conduct a hot water extraction treatment for 1 hour at 40°C or 120°C, and the concentrations of a sodium ion and a chloride ion were-measured by ion chromatography. The measured results are shown in Table 3.

Table 3

| | Example 1 | | | Example 3 | | |
|---|---|---|---|---|---|---|
| Temperature of hot water extraction | 40°C | 120°C | B/A | 40°C | 120°C | B/A |
| Na+ content [μg/g] | 87 | 207 | - | 1 | 23 | - |
| Cl- content [μg/g] | 92 (A) | 234 (B) | 2.5 times | 15 (A) | 2071 (B) | 138 times |

From the results shown in Table 3, it is understood that the content of ionic components varies according to the temperature of the hot water extraction, and the content of the ionic components becomes higher as the extraction temperature rises. It is particularly understood that the chloride ion content at 120°C rapidly increases in the case where the polymerizable monomer composition containing vinylidene chloride as a polymerizable monomer was used (Example 3).

Example 4

2-Ethylhexyl acrylate/vinyl acetate/acrylic acid (weight ratio = 83/15/2) were polymerized in a mixed solvent of ethyl acetate and acetone to prepare a solution containing a copolymer. To 100 parts by weight (solid content) of the thus-obtained acrylic copolymer was added 0.6 part by weight of a polyisocyanate crosslinking agent (product of Nippon Polyurethane Industry Co., Ltd., trade name "CORONATE L"). Further, 30 parts by weight of each of 3 kinds of the thermally foamable microspheres (electric conductivities = 0.135 mS/cm, 0.460 mS/cm and 1.610 mS/cm) obtained in Example 2 were added to prepare 3 kinds of solutions.

Each of these 3 kinds of the solutions was applied on to a polyethylene terephthalate film having a 100 μm so as to give a dry thickness of 60 μm and dried. Each pressure sensitive adhesive sheet thus obtained was stuck on a silicon wafer vapor-deposited with aluminum, and a copper plate to leave them to stand for 10 days under an environment of 40°C in temperature and 90% in relative humidity. Thereafter, the pressure sensitive adhesive sheet was released to observe the surfaces of the silicon wafer vapor-deposited with aluminum and the copper plate, thereby determining whether corrosion occurred or not. The pressure sensitive adhesive sheet was determined to "cause corrosion" if the silicon wafer or copper plate had any corroded portion. The results are shown in Table 4.

Table 4

| Electric conductivity of thermally foamable microspheres [mS/cm] | To silicon wafer vapor-deposited with aluminum | To copper plate |
|---|---|---|
| 0.135 | Cause no corrosion | Cause no corrosion |
| 0.460 | Cause no corrosion | Cause no corrosion |
| 1.610 | Cause corrosion | Cause corrosion |

As apparent from the results shown in Table 4, no corrosion was observed in any case of the thermally foamable microspheres (having electric conductivities of 0.135 mS/cm and 0.460 mS/cm, respectively) according to the present invention. However, corrosion was observed in the case where the electric conductivity was 1.610 mS/cm.

INDUSTRIAL APPLICABILITY

According to the present invention, there can be provided thermally foamable microsphere, in which the content of ionic impurities has been reduced, and inconveniences such as corrosion of metals and contamination of electronic parts have been solved. According to the present invention, there can also be provided polymer compositions, foaming paints, foaming adhesives or pressure sensitive adhesives, foaming inks, etc., which contain the thermally foamable microspheres reduced in the content of ionic impurities and do not cause inconveniences such as corrosion of metals and contamination of electronic parts.

According to the present invention, in the washing step after the polymerization, thermally foamable microspheres exhibiting a desired electric conductivity can be further obtained with good efficiency on the basis of a previously prepared relational expression between the electric conductivity of a filtrate and the electric conductivity of a water extract of the thermally foamable microspheres.

The thermally foamable microspheres according to the present invention can be used as fillers for paints for automobiles and the like; foaming agents for wallpapers and foaming inks (for applying relief patterns to T-shirts and the like); and shrink-preventing agents as they are kept unfoamed or making good use of their expanding ability. The thermally foamable microspheres according to the present invention are used for the purpose of reducing the weights of polymeric materials, paints, various materials, etc., making them porous and imparting various functionalities making good use of their volume increase by foaming. The thermally foamable microspheres according to the present invention can be dispersed in an adhesive or pressure sensitive adhesive to provide a thermally released adhesive or pressure sensitive adhesive sheet or tape.

Various functionalities can be imparted to the thermally foamable microspheres according to the present invention by conducting a surface treatment or adding various kinds of additive components such as dyes to the foaming agent. The thermally foamable microspheres according to the present invention can be suitably applied to use applications relevant to electronic parts and use applications coming into contact with metals because of their reduced ionic impurity content.

**Claims**

1. A thermally foamable microsphere having a structure that a foaming agent is encapsulated in an outer shell formed from a polymer, wherein supposing an electric conductivity of a water extract obtained by the following Steps 1 and 2:

   (1) Step 1 of dispersing 5 g of the thermally foamable microsphere in 20 g of ion-exchanged water having a pH of 7 and an electric conductivity of $\sigma 1$ at a temperature of 25°C to prepare a liquid dispersion; and
   (2) Step 2 of shaking the liquid dispersion at the same temperature for 30 minutes to conduct a water extraction treatment,
   as measured at 25°C is $\sigma 2$, a difference $\sigma 2 - \sigma 1$ between $\sigma 2$ and $\sigma 1$ is at most 1 mS/cm.

2. The thermally foamable microsphere according to claim 1, wherein the difference $\sigma 2 - \sigma 1$ is at most 0.5 mS/cm.

3. The thermally foamable microsphere according to claim 1, wherein the difference $\sigma 2 - \sigma 1$ is at most 0.1 mS/cm.

4. The thermally foamable microsphere according to claim 1, wherein the content of a metal ion selected from ions of metals of Group 1A of the periodic table and ions of metals of Group 2A of the periodic table in a hot water extract obtained by dispersing 1 g of the thermally foamable microsphere in 50 ml of ultrapure water to conduct extraction for 1 hour at 40°C as measured by ion chromatography is at most 1,000 $\mu$g/g.

5. The thermally foamable microsphere according to claim 1, wherein the content of a halide ion in a hot water extract obtained by dispersing 1 g of the thermally foamable microsphere in 50 ml of ultrapure water to conduct extraction for 1 hour at 40°C as measured by ion chromatography is at most 1,500 $\mu$g/g.

6. The thermally foamable microsphere according to claim 1, wherein when the contents ($\mu$g/g) of a halide ion per gram of the thermally foamable microsphere are measured by the following Steps I to III:

   (I) Step I of dispersing 1 g of the thermally foamable microsphere in 50 ml of ultrapure water at a temperature of 25°C to prepare a liquid dispersion;
   (II) Step II of heating the liquid dispersion to respective temperatures of 40°C and 120°C to conduct hot water extraction treatments for 1 hour; and
   (III) Step III of cooling the respective hot water extracts and then measuring halide ion concentrations in the respective hot water extracts at 25°C by ion chromatography, a ratio B/A of the halide ion content B in the case where the hot water extraction treatment was conducted at the temperature of 120°C to the halide ion content A in the case where the hot water extraction treatment was conducted at the temperature of 40°C is at most 50 times.

7. The thermally foamable microsphere according to claim 6, wherein the ratio B/A is at most 5 times.

8. The thermally foamable microsphere according to claim 1, wherein the polymer forming the outer shell is a homopolymer or copolymer obtained by polymerizing a polymerizable monomer or polymerizable monomer mixture containing at least one vinyl monomer selected from the group consisting of vinylidene chloride, acrylonitrile, methacrylonitrile, acrylic acid, methacrylic acid, acrylic esters, methacrylic esters, aromatic vinyl compounds and vinyl acetate.

9. The thermally foamable microsphere according to claim 8, wherein the polymerizable monomer mixture further contains, as a crosslinkable monomer, a polyfunctional compound having at least two polymerizable carbon-carbon double bonds in a proportion of 0.01 to 5 parts by weight per 100 parts by weight of said at least one vinyl monomer.

**10.** The thermally foamable microsphere according to claim 9, wherein the polyfunctional compound is a compound having a structure that 2 polymerizable carbon-carbon double bonds are linked directly or indirectly through a flexible chain derived from a diol compound selected from the group consisting of polyethylene glycol, polypropylene glycol, alkyldiols, alkyl ether diols and alkyl ester diols.

**11.** The thermally foamable microsphere according to claim 8, wherein the polymer forming the outer shell is a vinylidene chloride (co)polymer or (meth)acrylonitrile (co)polymer.

**12.** The thermally foamable microsphere according to claim 11, wherein the vinylidene chloride (co)polymer is a vinylidene chloride (co)polymer obtained by using a polymerizable monomer or polymerizable monomer mixture containing 30 to 100% by weight of vinylidene chloride and 0 to 70% by weight of at least one vinyl monomer selected from the group consisting of acrylonitrile, methacrylonitrile, acrylic esters, methacrylic esters, styrene and vinyl acetate.

**13.** The thermally foamable microsphere according to claim 11, wherein the (meth)acrylonitrile (co)polymer is a (meth) acrylonitrile (co)polymer obtained by using a polymerizable monomer or polymerizable monomer mixture containing 30 to 100% by weight of at least one nitrile monomer selected from the group consisting of acrylonitrile and methacrylonitrile and 0 to 70% by weight of at least one vinyl monomer selected from the group consisting of vinylidene chloride, acrylic esters, methacrylic esters, styrene and vinyl acetate.

**14.** The thermally foamable microsphere according to claim 1, wherein the polymer forming the outer shell is a (co) polymer formed by polymerization of a polymerizable monomer or polymerizable monomer mixture containing no bound halogen atom.

**15.** The thermally foamable microsphere according to claim 14, wherein the (co)polymer formed by polymerization of the polymerizable monomer or polymerizable monomer mixture containing no bound halogen atom is a (meth) acrylonitrile (co)polymer obtained by using a polymerizable monomer or polymerizable monomer mixture containing 30 to 100% by weight of at least one monomer selected from the group consisting of acrylonitrile and methacrylonitrile and 0 to 70% by weight of at least one monomer selected from the group consisting of acrylic esters and methacrylic esters.

**16.** The thermally foamable microsphere according to claim 14, wherein the (co)polymer formed by polymerization of the polymerizable monomer or polymerizable monomer mixture containing no bound halogen atom is a (meth) acrylonitrile copolymer obtained by using a polymerizable monomer mixture containing 1 to 99% by weight of acrylonitrile, 1 to 99% by weight of methacrylonitrile and 0 to 70% by weight of at least one monomer selected from the group consisting of acrylic esters and methacrylic esters.

**17.** The thermally foamable microsphere according to claim 14, wherein the (co)polymer formed by polymerization of the polymerizable monomer or polymerizable monomer mixture containing no bound halogen atom is a (meth) acrylonitrile copolymer obtained by polymerizing a polymerizable monomer mixture containing 70 to 99% by weight of at least one nitrile monomer selected from the group consisting of acrylonitrile and methacrylonitrile and 1 to 30% by weight of another vinyl monomer.

**18.** The thermally foamable microsphere according to claim 8, wherein the polymer forming the outer shell is a copolymer obtained by copolymerizing 1 to 40% by weight of at least one vinyl monomer selected from vinyl monomer of unsaturated acids, 20 to 99% by weight of at least one vinyl monomer selected from the group consisting of acrylic esters and methacrylic esters, and optionally 0 to 5% by weight of a further vinyl monomer.

**19.** A composition comprising the thermally foamable microsphere according to any one of claims 1 to 18 or a foam thereof dispersed in a polymeric material, paint, adhesive or pressure sensitive adhesive, ink or aqueous medium.

**20.** A process for producing a thermally foamable microsphere, which comprises a polymerization step of suspension-polymerizing a polymerizable monomer mixture containing at least a foaming agent and a polymerizable monomer in an aqueous dispersion medium to synthesize a thermally foamable microsphere having a structure that the foaming agent is encapsulated in an outer shell formed from a polymer formed, and a washing step of washing the thermally foamable microsphere, wherein washing with ion-exchanged water and filtration are conducted in the washing step, and at this time an electric conductivity of a filtrate is measured to obtain a thermally foamable microsphere exhibiting a desired electric conductivity on the basis of a previously prepared relational expression between the electric conductivity of the filtrate and the electric conductivity of a water extract of the thermally foamable microsphere.

21. The production process according to claim 20, wherein the relational expression is a relational expression of a linear model represented by the following expression (1), in which the electric conductivity x of the filtrate is defined as an independent variable, and the electric conductivity y of the water extract of the thermally foamable microsphere is defined as a dependent variable,

$$y = \alpha + \beta x \qquad (1)$$

wherein $\alpha$ and $\beta$ are parameters.

Fig. 1

Fig. 2

<div align="center">

**INTERNATIONAL SEARCH REPORT**

</div>

| | International application No. |
|---|---|
| | PCT/JP2006/302403 |

**A. CLASSIFICATION OF SUBJECT MATTER**
*C09K3/00*(2006.01), *B01J13/14*(2006.01), *C08J9/32*(2006.01)

According to International Patent Classification (IPC) or to both national classification and IPC

**B. FIELDS SEARCHED**

Minimum documentation searched (classification system followed by classification symbols)
C09K3/00, B01J13/14, C08J9/32

Documentation searched other than minimum documentation to the extent that such documents are included in the fields searched
Jitsuyo Shinan Koho          1922-1996   Jitsuyo Shinan Toroku Koho   1996-2006
Kokai Jitsuyo Shinan Koho    1971-2006   Toroku Jitsuyo Shinan Koho   1994-2006

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 2003-128830 A  (Sekisui Chemical Co., Ltd.),<br>08 May, 2003 (08.05.03),<br>Claims 1 to 9; Par. Nos. [0001], [0018] to [0022], [0069]<br>(Family: none) | 1-19<br>20-21 |
| Y<br>A | JP 2004-323854 A  (Matsumoto Yushi-Seiyaku Co., Ltd.),<br>18 November, 2004 (18.11.04),<br>Claims 1 to 6; Par. Nos. [0001], [0011] to [0012]; examples 2, 4<br>(Family: none) | 1-19<br>20-21 |

☒ Further documents are listed in the continuation of Box C.      ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>12 April, 2006 (12.04.06) | Date of mailing of the international search report<br>25 April, 2006 (25.04.06) |
|---|---|
| Name and mailing address of the ISA/<br>Japanese Patent Office | Authorized officer |
| Facsimile No. | Telephone No. |

Form PCT/ISA/210 (second sheet) (April 2005)

**EP 1 857 519 A1**

<table>
<tr><td colspan="3" align="center"><b>INTERNATIONAL SEARCH REPORT</b></td><td>International application No.<br>PCT/JP2006/302403</td></tr>
</table>

C (Continuation). DOCUMENTS CONSIDERED TO BE RELEVANT

| Category* | Citation of document, with indication, where appropriate, of the relevant passages | Relevant to claim No. |
|---|---|---|
| Y<br>A | JP 4-292643 A (Casco Nobel AB.),<br>16 October, 1992 (16.10.92),<br>Claims 1 to 10; Par. Nos. [0001], [0009] to<br>[0013], [0018]; example 1<br>& US 5155138 A            & NO 914404 A<br>& AT 133688 T             & PT 99487 B<br>& SE 9003600 A            & ES 2082921 T1<br>& FI 915247 A             & AU 634914 B<br>& CA 2055203 A            & KR 166079 B1<br>& NZ 240512 A | 1-19<br>20-21 |
| Y | JP 2004-175960 A (Nitto Denko Corp.),<br>24 June, 2004 (24.06.04),<br>Par. No. [0003]<br>(Family: none) | 1-19 |
| Y | JP 60-194462 A (Fuji Photo Film Co., Ltd.),<br>02 October, 1985 (02.10.85),<br>Page 3, upper left column, line 10 to upper<br>right column, line 3<br>(Family: none) | 1-19 |

Form PCT/ISA/210 (continuation of second sheet) (April 2005)

**EP 1 857 519 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004175960 A